# EUROPEAN PATENT APPLICATION

(11) **EP 4 329 318 A1**
(43) Date of publication of application: **28.02.2024**
(21) Application number: 23790993.2
(22) Date of filing: 28.03.2023
(51) Int. Cl.: H04N 21/4363

(54) **DEVICE CONNECTION METHOD AND APPARATUS, DEVICE AND STORAGE MEDIUM**

(30) Priority: 22.04.2022 CN 202210430422
(71) Applicant: Guangzhou Shizhen Information Technology Co., Ltd., Guangzhou, Guangdong 510663 (CN)
(72) Inventor: OUYANG, Yuji, Guangzhou, Guangdong 510663 (CN)
(74) Representative: Grünecker Patent- und Rechtsanwälte PartG mbB
(86) International application number: PCT/CN2023/084448
(87) International publication number: WO 2023/202333

(57) **Abstract**

The present disclosure discloses a method, equipment, apparatus for connecting devices, and storage medium. The method includes: generating a first connection code based on device information, and sending the first connection code and a request for a second connection code to a server, so that the server stores the first connection code and the second connection code in association, where the first connection code is used as at least one of a verification code and an address code for a local area network, and the second connection code is used as a verification code for a wide area network; displaying the first or second connection code to receive a connection request sent by the first device through the local area network or the wide area network, where the connection request is generated by the first device based on the first or second connection code; and in response to the connection request, connecting to the first device through the local area network or wide area network. According to the present disclosure, in the case of being compatible with the network environment of both local area networks and wide area networks, device connection success rate is improved, and the technical problem of poor connection code compatibility and low device connection success rate in the prior art is solved.

## Description

The present disclosure claims a priority of Chinese patent application No. 202210430422.7, which is filed with CNIPA on April 22, 2022, and the entire contents of which are incorporated herein by reference.

### FIELD

The present disclosure relates to the field of communication, and in particular to a method, equipment, apparatus for connecting devices, and storage medium.

### BACKGROUND

Currently, with the continuous development of network technology, wireless screen projection technology has been applied in more and more scenarios in the fields of office and education. Before wireless screen projection is conducted, it is necessary to input a connection code in the projection sending end, so that a projection sending end and a projection receiving end are connected. The current connection code can only be used in scenarios where both the projection sending and receiving ends are located within the same local area network (LAN). The connection code is serves as at least one of the random verification codes or address codes. However, when the projection sending end is only connected to the wide area network (WAN), or when the projection sending end cannot directly connect to an address of the projection receiving end, the projection sending end cannot connect to the projection receiving end through the connection code. Secondly, in some environments with high information security, the connection code cannot be compatible with the environment, and even cannot be used.

### SUMMARY

According to embodiments of the present disclosure, a method, equipment, apparatus for connecting devices, and storage medium are provided, which can improve a success rate of device connection while being compatible with LAN and WAN, and solve the technical problem of poor connection code compatibility and a low success rate of device connection in the prior art.

According to a first aspect of the present disclosure, a method for connecting devices is provided, which includes:
generating a first connection code based on device information, and sending the first connection code and a request for a second connection code to a server, so that the server stores the first connection code and the second connection code in association, where the first connection code is used as at least one of a verification code and an address code for a local area network, and the second connection code is used as a verification code for a wide area network;
displaying the first or second connection code to receive a connection request sent by the first device through the local area network or the wide area network, where the connection request is generated by the first device based on the first or second connection code; and
in response to the connection request, connecting to the first device through the local area network or wide area network.

According to a second aspect of the present disclosure, a method for connecting devices is provided, which includes:
receiving a first connection code or a second connection code, where the first connection code is used as at least one of a verification code and an address code for a local area network, and the second connection code is used as a verification code for a wide area network;
when the second connection code is received, requesting the server to send the first connection code associated with the second connection code;
based on the first connection code, sending a first connection request to the second device through the local area network;
when the first connection code is received and connection establishment corresponding to the first connection request fails, requesting the server to send the second connection code associated with the first connection code; and
after confirming that the connection establishment corresponding to the first connection request fails, sending a second connection request to the second device through the wide area network based on the second connection code.

According to a third aspect of the present disclosure, equipment for connecting devices is provided, which includes a connection-code generating module, a connection-code displaying module, and a connection responding module;
the connection-code generating module is configured to generate a first connection code based on device information, and send the first connection code and a request for a second connection code to a server, so that the server stores the first connection code and the second connection code in association, where the first connection code is used as at least one of a verification code and an address code for a local area network, and the second connection code is used as a verification code for a wide area network;
the connection-code displaying module is configured to display the first or second connection code to receive a connection request sent by the first device through the local area network or the wide area network, where the connection request is generated by the first device based on the first or second connection code;
the connection responding module is configured to, in response to the connection request, connect to the first device through the local area network or the wide area network.

According to a fourth aspect of the present disclosure, equipment for connecting devices is provided, which includes a connection-code receiving module, a first connection-code requesting module, a first connection requesting module, a second connection-code requesting module, and a second connection requesting module;
the connection-code receiving module is configured to receive a first connection code or a second connection code, where the first connection code is used as at least one of a verification code and an address code for a local area network, and the second connection code is used as a verification code for a wide area network;
the first connection-code requesting module is configured to, when the second connection code is received, request the server to send the first connection code associated with the second connection code;
the first connection requesting module is configured to, based on the first connection code, send a first connection request to the second device through the local area network;
the second connection-code requesting module is configured to, when the first connection code is received and connection establishment corresponding to the first connection request fails, request the server to send the second connection code associated with the first connection code;
the second connection requesting module is configured to, after confirming that the connection establishment corresponding to the first connection request fails, send a second connection request to the second device through the wide area network based on the second connection code.

According to a fifth aspect of the present disclosure, an apparatus for connecting devices is provided, which includes a processor and a memory;
the memory is configured to store a computer program and transfer the computer program to the processor;
the processor is configured to perform a method for connecting devices as mentioned in the first or second aspect based on an instruction in the computer program.

According to a sixth aspect of the present disclosure, a storage medium for storing computer executable instructions is provided, the computer executable instructions are used to perform a method for connecting devices as mentioned in the first or second aspect when executed by a computer processor.

As mentioned above, according to an embodiment of the present disclosure, the second device only needs to display a connection code, so that the first device is connected to the second device through LAN or WAN, which can be compatible with the network environment of both LAN and WAN. In addition, the user only needs to obtain a connection code during use, and does not need to obtain different connection codes for repeated connection operations, regardless of whether the first or second connection code is displayed, the connection operations performed by users on the first device are the same, and a user does not need to learn different operations for different connection codes, which reduces learning and operation costs of the user. The embodiments of the present disclosure can solve the technical problem of poor connection code compatibility and low device connection success rate in the prior art.

### BRIEF DESCRIPTION OF THE DRAWINGS

Fig. 1 is a schematic diagram of a scenario where devices are interconnected according to an embodiment of the present disclosure.
Fig. 2 is a schematic diagram of a scenario where devices are interconnected within LAN according to an embodiment of the present disclosure.
Fig. 3 is a flowchart of a method for connecting devices according to an embodiment of the present disclosure.
Fig. 4 is a schematic diagram of a scenario of applying a method for connecting devices according to an embodiment of the present disclosure.
Fig. 5 is a flowchart of another method for connecting devices according to an embodiment of the present disclosure.
Fig. 6 is a flowchart of another method for connecting devices according to an embodiment of the present disclosure.
Fig. 7 is a flowchart of the first device parsing a connection code according to an embodiment of the present disclosure.
Fig. 8 is a process schematic diagram of another method for connecting devices according to an embodiment of the present disclosure.
Fig. 9 is a process schematic diagram of another method for connecting devices according to an embodiment of the present disclosure.
Fig. 10 is a process schematic diagram of another method for connecting devices according to an embodiment of the present disclosure.
Fig. 11 is a structural schematic diagram of another apparatus for connecting devices according to an embodiment of the present disclosure.
Fig. 12 is a structural schematic diagram of another apparatus for connecting devices according to an embodiment of the present disclosure.
Fig. 13 is a structural schematic diagram of an apparatus for connecting devices according to an embodiment of the present disclosure.

### Reference Numerals:

first device 10, second device 20, server 30.

### DESCRIPTION OF THE PREFERRED EMBODIMENTS

The following description and accompanying drawings fully illustrate the specific implementation scheme of the present disclosure, in order to enable those skilled in the art to practice them. The embodiments only represent possible changes. Unless explicitly required, individual components and functions are optional, and the sequence of operations may vary. The parts and features of some implementation schemes may be included or replaced by the parts and features of other implementation schemes. The scope of the implementation schemes of the present disclosure includes the entire scope of the claims, as well as all available equivalents of the claims. In this description, each implementation scheme may be individually or collectively represented by the term "invention" for convenience only, and if more than one invention is actually disclosed, it is not intended to automatically limit the scope of the application to any single invention or inventive concept. In this description, relational terms such as first and second are only used to distinguish one entity or operation from another entity or operation, without requiring or implying any actual relationship or order between these entities or operations. Moreover, the terms "including", "containing", or any other variation thereof are intended to cover non-exclusive inclusion, such that a process, method, or apparatus for connecting devices of a series of elements includes not only those elements, but also other elements that are not explicitly listed. The various embodiments in this description are described in a progressive manner, and each embodiment focuses on the differences from other embodiments. The same and similar parts between each embodiment may be referred to each other. For the structure, products, etc. disclosed in the embodiments, as they correspond to the disclosed parts of the embodiments, the description is relatively simple. Reference is made to the method section for relevant information.

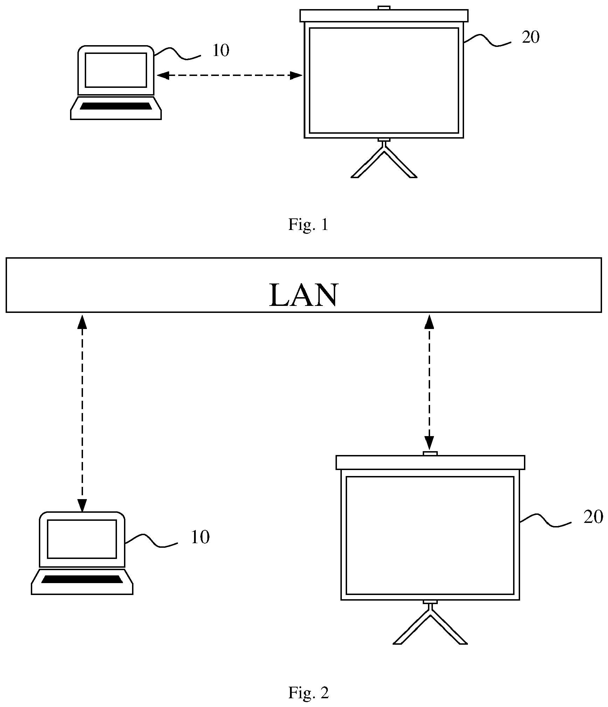

As shown in Fig. 1, Fig. 1 is a schematic diagram of a scenario where devices are interconnected according to an embodiment of the present disclosure. A first device 10 and a second device 20 may interact. The first device 10 may be a mobile phone, tablet, desktop computer, Windows, Mac, or Chrome laptop, or other portable devices, and the second device 20 may be an interactive intelligent board, interactive board, projector, screen, and/or TV. The first device 10 and the second device 20 are interconnected, for example, the first device 10 and the second device 20 may be connected through a wireless communication network. The wireless communication network may be understood as any network between the first device 10 and the second device 20 that does not require a network cable connection, such as Radio Frequency (RF), optical or infrared communication, for example, infrared interface (IrDA), diffuse infrared, Wireless Local Area Network (WLAN), Microwave Access Global Interconnection (WiMax), Wireless Local Area Network (Wi-Fi), Wireless Local Area Network Direct (Wi-Fi Direct), Bluetooth or any other wireless communication network familiar to those in the art, such as Optical Network (LiFi). Of course, in other embodiments, the first device 10 and the second device 20 may also be connected through a wired communication network.

After the first device 10 and the second device 20 are connected, information interaction may be carried out. For example, the first device 10 may send currently displayed screen data to the second device 20, and the currently displayed screen data may include one or more of audio data and video data. After the screen data sent by the first device 10 is received, the second device 20 may process the received screen data and display it on its own page to achieve screen projection. For example, the first device 10 may encode the current screen data and send the encoded screen data to the second device 20. The second device 20 receives the encoded screen data and decodes it to obtain the decoded screen data. The second device 20 may display the decoded screen data. Specific description is made by taking an example of the first device 10 and the second device 20 connecting through wireless LAN.

For example, as shown in Fig. 2, Fig. 2 is a schematic diagram of a scenario where devices are interconnected within LAN according to an embodiment of the present disclosure. The first device 10 and the second device 20 are located within the same LAN. LAN refers to a private network formed in a local area. The first device 10 and the second device 20 are connected through LAN. When the first device 10 needs to be projected a screen onto the second device 20, the second device 20 generates a LAN connection code based on certain rules and displays it. After the LAN connection code is input in the first device 10, the first device 10 may find the second device 20 in LAN based on the LAN connection code, and perform information interaction with the second device 20 through LAN, such as the above screen projection process. However, when the first device 10 and the second device 20 are not in the same LAN, information interaction cannot be carried out through the above-mentioned LAN connection code. For example, if the second device 20 is a mobile phone and the user uses the phone through a mobile communication network, it cannot be connected to the first device 10 through the above-mentioned LAN connection code.

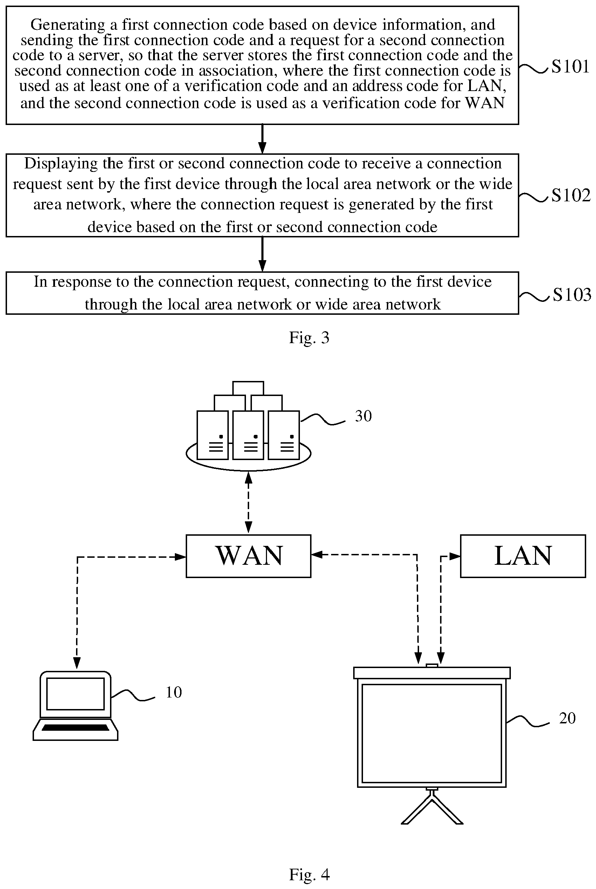

Based on this, according to an embodiment of the present disclosure, a method for connecting devices is provided, as shown in Fig. 3, Fig. 3 is a flowchart of a method for connecting devices according to an embodiment of the present disclosure. The method may be applied to the second device 20, which includes the following steps:

Step 101, generating a first connection code based on device information, and sending the first connection code and a request for a second connection code to a server, so that the server stores the first connection code and the second connection code in association, where the first connection code is used as at least one of a verification code and an address code for LAN, and the second connection code is used as a verification code for WAN.

In this embodiment, the second device 20 first generates a first connection code based on its own device information. The device information includes, for example, LAN IP, service port number, hotspot IP, hotspot Service Set Identifier (SSID), hotspot password, and/or physical address. LAN IP refers to the network address of LAN. The service port number refers to port number of the server 30. Various services in the server 30 use different ports to provide different services, and the port number of the server 30 refers to the number in different ports. Hotspot refers to the device converting GPRS, 3G, or 4G signals into wireless LAN signals and broadcasting them for use by other devices. Hotspot IP refers to the address of wireless LAN. Hotspot SSID refers to dividing wireless LAN of a hotspot into several subnetworks that require different authentication. Each subnetwork requires independent authentication, and only authenticated users can enter the corresponding subnetwork to prevent unauthorized users from entering the wireless LAN. Hotspot password refers to a password required to connect to the wireless LAN of the hotspot, the hotspot may be corrected to only when the password is can connect. Physical address refers to the address of the device that broadcasts hotspots. The physical address refers to an address of the device that broadcasts hotspots, which is set by the manufacturer at the factory to identify each device in the network.

The first connection code refers to a connection code used to connect different devices within the same LAN. In this embodiment, the first connection code is used as at least one of the verification codes and address codes in LAN, that is, the first connection code may only be used as the verification code of LAN, only be used as the address code of LAN, or be used as the verification code and address code of LAN. Verification code refers to the connection code used to match a specific device, and the verification code includes verification information of the device. For example, the first device 10 finds a list of the second devices 20 through protocols on LAN (such as the Simple Service Discovery Protocol or Multicast DNS protocol), and then matches a specific receiving end from the list of the second devices 20 through a connection code to indirectly discover and connect to the second device 20. Address code refers to a connection code that contains IP address information, and address code includes the IP address information of the device. For example, information such as IP address is mapped into a connection code through a certain mapping relationship. After a projection sending device inputs the connection code, the projection sending device can directly find and connect to the projection receiving device.

In one embodiment, the first connection code defaults to a six-character connection code. The character refers to a character referring to a type of glyph unit or symbol, including letters, numbers, arithmetic symbols, punctuation marks, and other symbols, as well as some functional symbols. In this embodiment, the characters of the first connection code may be composed of any one or more of numbers or letters. For example, the first connection code may be CDF96Q or WS7U89, etc. In this embodiment, the specific content of the first connection code is not limited. Understandably, the first connection code may be expanded to 7 or more characters, which may add more IP address information, change bits, ports, or other network information. Specifically, in this embodiment, the second device 20 generates a first connection code based on its own device information. Specifically, based on the RFC 1918 standard, IPv4 private addresses in LAN are divided into four segments, as shown in Table 1:

**Table 1**

| IPv4 address segment | Type bit | IP address range | Quantity |
|---|---|---|---|
| 1. Class A private segment | 00 | 10.0.0.0 ∼ 10.255.255.255 | 16777216 |
| 2. Class B private segment | 01 | 172.16.0.0 ∼ 172.31.255.255 | 1048576 |
| 3. Class C private segment | 10 | 192.168.0.0 ∼ 192.168.255.255 | 65536 |
| 4. Preserve extension segment | 11 | Undefined | Undefined |

Due to the fact that the first connection code is a six-digit or six-letter connection code, consisting of total 36 characters, which includes 0-9 and A-Z (case insensitive), excludes the digits "0" and "1", as well as the letters "I" and "O" that are easily recognizable by users, there are 32 remaining characters. Therefore, the encoding space of the connection code is 32⁶ = 2³⁰, which means there are 30 binary bits of encoding space for storing content.

After the IPv4 private address is divided, the first device 10 fills 30 binary bits of the connection code with information such as IP address, port, random bit, parity bit, and type bit. Specifically, when the IP address of the second device 20 is an address of Class A private segment, the binary bits of the connection code represent type, parity bit, port, and IP address information in descending order, as shown in Table 2:

**Table 2**

| **Bit** | **29** | **28** | **27** | **26** | **25** | **24** | **23** | **0** |
|---|---|---|---|---|---|---|---|---|
| Implication | Type bit | | Parity bit | | Port | | IP address information | |

When the IP address of the second device 20 is a Class B private segment address, the binary bits of the connection code represent type, parity bit, port, and IP address information in descending order, as shown in Table 3:

**Table 3**

| **Bit** | **29** | **28** | **27** | **25** | **24** | **22** | **21** | **20** | **19** | **0** |
|---|---|---|---|---|---|---|---|---|---|---|
| Implication | Type bit | | Parity bit | | Change bit | | Port | | IP address information | |

When the IP address of the second device 20 is a Class C private segment address, the binary bits of the connection code represent the type, parity bit, port, and IP address information in descending order, as shown in Table 4:

**Table 4**

| **Bit** | **29** | **28** | **27** | **25** | **24** | **22** | **21** | **20** | **19** | **0** |
|---|---|---|---|---|---|---|---|---|---|---|
| Implication | Type bit | | Parity bit | | Change bit | | Port | | IP address information | |

The type bit represents the type of IP address, the type bit of Class A private segment address is 00, the type bit of Class B private segment address is 01, the type bit of Class C private segment address is 10, and the type bit of reserved extension segment is 11. The parity bit is a number composed of other bits in the connection code, except for the parity bit. This number is obtained by taking the remainder of 4. The parity bit is calculated for the connection code input by the user and compared with the parity bit saved in the connection code to confirm whether the user has input an error. The change bit is randomly generated within the range of 0-15. In order that the change bits can affect other parts, the change bits are replaced with any four other bits to avoid the situation where only one character of the six connection codes changes. Port, used to store the subscript of the port array, may be obtained from the service port number in the device information. The IP address information represents the IP address of the second device 20 in LAN, which may be obtained from the LAN IP in the device information.

After the first connection code is generated, the second device 20 uploads the first connection code to the server 30. The server 30 refers to a device that provides computing or application services to other devices in the network. At the same time, the second device 20 sends a request for a second connection code to the server 30. After the request is received, the server 30 generates a second connection code and stores the second and first connection codes in association. It should be noted that in this embodiment, the second connection code is the connection code used in WAN, which can enable different devices in WAN to be connected. WAN refers to a remote network that connects computer communication in different LAN or metropolitan area network (MAN). Since different devices in WAN can access each other, each WAN connection code must ensure uniqueness, otherwise there may be connected to other incorrect devices, leading to serious problems such as information leakage. Therefore, the second connection code is used as a verification code in WAN to match specific devices in WAN. In one embodiment, the server 30 may use the IP address in the first connection code as the connection code corresponding to the reserved extension segment as the WAN connection code.

Step 102, displaying the first or second connection code to receive a connection request sent by the first device through the local area network or the wide area network, where the connection request is generated by the first device based on the first or second connection code.

After a request for a second connection code is sent to the server 30, the second device 20 may display either the first or second connection code. For example, the second device 20 may display the connection code in a random position on the screen, or display the connection code in a specific area on the screen. If the second device 20 needs to display the first connection code, the first connection code returned by the server 30 need to be received. Subsequently, the user inputs the first or second connection code into the first device 10 based on the first or second connection code displayed on the second device 20. After the first or second connection code is received, the first device 10 generates a connection request based on the first or second connection code. The connection request is used to request for connection to the second device 20, the connection request is generated based on the first or second connection code received from the first device 10. For example, as shown in Fig. 4, Fig. 4 is a schematic diagram of a scenario of applying a method for connecting devices according to an embodiment of the present disclosure. In this diagram, there is a first device 10, a second device 20, and a server 30. The first device 10 is connected to WAN, the second device 20 is connected to WAN and LAN, and the second device 20 displays the first or second connection code after receiving the first or second connection code. The user inputs the connection code displayed on the second device 20 into the first device 10. After the input connection code is received, the first device 10 first judges whether the connection code is the first or second connection code. When the connection code is the first connection code, the first device 10 parses the first connection code, obtains the IP address information and verification information of the second device 20 from the first connection code, and then sends a connection request to the second device 20 through LAN based on the IP address information and verification information. For example, if Bit29-28 of the first connection code is parsed as a type, how Bit27-0 of the first connection code is parsed may be determined based on the parsed type. When the type is 00, it indicates that the IP address type in the connection code is a Class A private segment address, Bit27-26 of the first connection code is parsed as a parity bit, Bit25-24 of the first connection code is parsed as a port, Bit23-0 of the connection code is parsed as IP address information. The connection codes of other IP address types is parsed similarly. Thus, when the user inputs the first connection code on the first device 10, the first device 10 may be connected to the second device 20 through LAN. In another embodiment, after the first connection code is received, the first device 10 may also obtain the second connection code associated with the first connection code from the server 30, parse the verification information from the second connection code, and send a connection request to the second device 20 through WAN based on the verification information. Alternatively, in another embodiment, after the first device 10 fails to connect to the second device 20 through LAN, the first device 10 obtains the second connection code associated with the first connection code from the server 30, parses the verification information from the second connection code, and sends a connection request to the second device 20 through WAN based on the verification information. Thus, even after the user inputs the first connection code on the first device 10, the first device 10 may be connected to the second device 20 through WAN.

When the second device 20 displays the second connection code, the user inputs the second connection code into the first device 10. In one embodiment, after the first device 10 receives the second connection code, a connection request may directly sent to the second device through WAN based on the second connection code, so that the first device and the second device are connected through WAN. In another embodiment, after the second connection code is received, the first device 10 obtains the first connection code associated with the second connection code from the server 30 based on the second connection code, and sends a connection request to the second device 20 through LAN based on the first connection code. If the first device 10 fails to connect to the second device 20 through LAN, the first device 10 sends a connection request to the first device 10 through WAN based on the second connection code, so that even when the user inputs the second connection code, the first device 10 may be connected to the second device 20 through LAN.

Step 103, in response to the connection request, connecting to the first device through the local area network or wide area network.

After the connection request is received from the first device 10, if the connection request is sent through LAN, the second device 20 establishes a connection with the first device 10 through LAN; if the connection request is sent through WAN, the second device 20 establishes a connection with the first device 10 through WAN.

As mentioned above, while the generated first connection code is uploaded to the server, the second device applies for a second connection code to the server. If the second device does not receive the second connection code, the second device displays the first connection code; if the second device receives the second connection code, the second device displays the second connection code. When subsequent users input the first or second connection code to the first device, the first device may send a connection request to the second device through LAN or WAN, enabling the second device to connect to the first device. In the implementation example of the present disclosure, the second device only needs to display a connection code to connect the first device to the second device through LAN or WAN, which can be compatible with network environments of both LAN and WAN. The user only needs to obtain a connection code during use, and does not need to obtain different connection codes for repeated connection operations. When the first or second connection code is displayed, the connection operations performed by users on the first device are the same, and the user does not need to learn different operations for different connection codes, reducing learning and operation costs of the user.

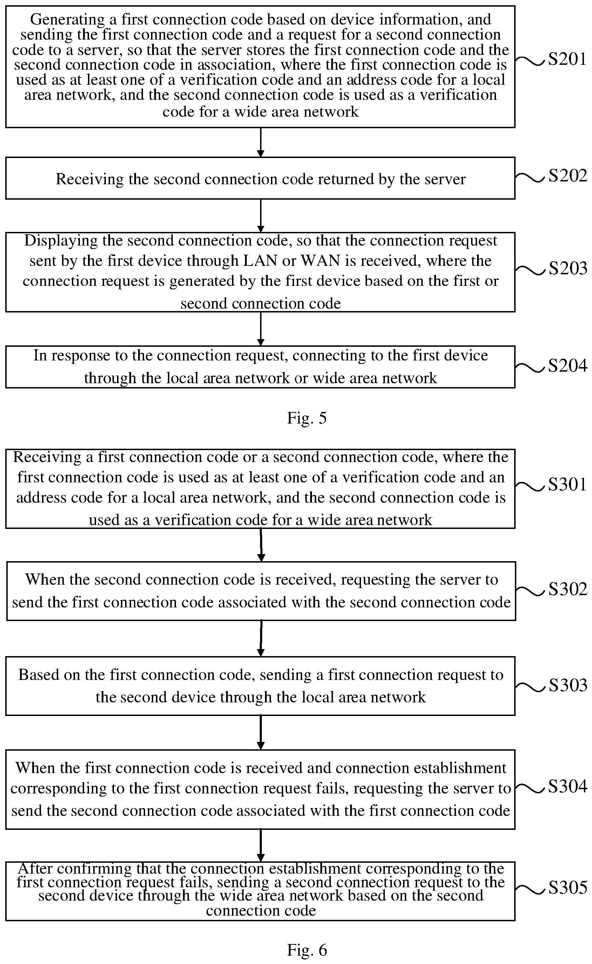

As shown in Fig. 5, Fig. 5 is a flowchart of another method for connecting devices according to an embodiment of the present disclosure, which includes the following steps:
Step 201, generating a first connection code based on device information, and sending the first connection code and a request for a second connection code to a server, so that the server stores the first connection code and the second connection code in association, where the first connection code is used as at least one of a verification code and an address code for a local area network, and the second connection code is used as a verification code for a wide area network.

Step 202, receiving the second connection code returned by the server.

In this embodiment, when the server 30 receives a request for a second connection code sent by the second device 20, the server 30 generates a second connection code, saves the second connection code and the first connection code in association, and sends the second connection code to the second device 20, so that the second device 20 receives the second connection code returned by the server 30.

Step 203, displaying the second connection code, so that the connection request sent by the first device through LAN or WAN is received, where the connection request is generated by the first device based on the first or second connection code.

After the second connection code is received, the second device 20 displays the second connection code to enable the user to input the second connection code into the first device 10. After the input second connection code is received, the first device 10 sends a connection request through LAN or WAN. The connection request is generated by the first device 10 based on the first or second connection code. Specifically, in one embodiment, after the second device 20 displays the second connection code, the user inputs the second connection code displayed by the second device 20 into the first device 10. The first device 10 parses the input connection code, and after the second connection code is determined as the second connection code for WAN, and obtains the first connection code associated with the second connection code from the server 30 based on the second connection code, generates a first connection request based on the first connection code and sends a first connection request to the second device 20 through LAN. If the first device 10 fails to connect to the second device 20 through LAN, the first device 10 further generates a second connection request based on the second connection code and sends a second connection request to the second device 20 through WAN, so that the second device 20 is connected to through WAN.

Step 204, in response to the connection request, connecting to the first device through the local area network or wide area network.

As mentioned above, after the first connection code is generated, the second device uploads the first connection code to the server and sends a request for a second connection code. After the second connection code returned by the server is received, the second device displays the second connection code, so that subsequent users may input the second connection code on the first device, and the first device may acquire the first connection code associated with the second connection code from the server, so that the second device is connected through LAN or WAN. The second connection code can be compatible with network environments of both LAN and WAN. The user only needs to input the second connection code into the first device during use. In different network environments, the connection operations performed by users on the first device are the same, and the user does not need to learn different operations based on the network environment, reducing learning and operational costs of the user.

It should be further noted that in this embodiment, the second connection code is a connection code that includes at least six characters.

In this embodiment, the second connection code and the first connection code are the same, both of which are assumed to include a six character connection code, thus having a 30 bit binary encoding space. However, the second connection code may be extended to 7 or more characters depending on the actual situation. For example, when IPv4 address of the first device 10 is relatively special and does not belong to Class A private segment address, Class B private segment address, or Class C private segment address, that is, the IP address is not in the range of 10.0.0.0-10.55.255.255.255, 172.16.0.0-172.31.255.255, 192.168.0.0-192.168.255.255, but rather a public IP address (commonly seen in overseas users, such as 202.102.34.128), the combination of six digits and letters in the second connection code mentioned above cannot be used. At this point, the second connection code may be extended to a combination of eight digits and letters. The encoding space of the second connection code is 32⁸ = 2⁴⁰, which means that the second connection code has 40 binary encoding spaces. As compared with the second connection code composed of six characters, it expands the encoding space and can encode IPv4 addresses worldwide.

On the basis of the above embodiments, the second connection code includes a type bit, a parity bit, and a random bit. The type bit is used to store the type of the LAN IP segment that is associated with the bit length of the parity bit. The parity bit is used to store the data parity result that is not equal to the parity result of at least one data in the random bit. The random bit is used to store the random number.

Due to the fact that in the first connection code, regardless of whether the type of LAN IP segment is Class A private segment address, Class B private segment address, or Class C private segment address, the data in the parity bit must be equal to the parity result of the specific data in the first connection code, and the specific data is part or all of the remaining bits in the first connection code. If the parity bit is not equal to the parity result of a specific data, the encoding space of the 30 bit binary has not been used. Therefore, the encoding space of the 30 bit binary that is not equal to the parity result of a specific data may be used as the second connection code. Specifically, the second connection code includes type bits, parity bits, and random bits. The type bits are used to store the type of LAN IP segment that is associated with the bit length of parity bits. When the type of the LAN IP segment is a Class A private segment address, the parity bits are bits 27-26. When the type of the LAN IP segment is a Class B private segment address, the parity bits are bits 27-25. When the type of the LAN IP segment is a Class C private segment address or a reserved extension segment, the parity bits are bits 27-22. The random bits of the second connection code are used to store random numbers, which are randomly generated by the server 30. Specifically, when the second connection code is a Class A private segment address, the random bit are bits 25-0, which means that the port and IP address information are filled with random numbers. When the second connection code is a Class B private segment address, the random bit are bits 24-0, which means that random numbers are filled with the change bit, port, and IP address information. When the second connection code is a Class C private segment address, the random bit are bits 21-0, which means that random numbers are filled with the change bit, port, and IP address information. When the second connection code is a reserved extension segment, the encoding space of the 30 bit binary of the second connection code is shown in Table 5, and the random bits are bits 21-0, that is, the reserved bits are filled with random numbers.

**Table 5**

| **Bit** | **29** | **28** | **27** | **22** | **21** | **0** |
|---|---|---|---|---|---|---|
| Implication | Type bit | | Parity bit | | Reserved bit | |

As mentioned above, there are four situations in the encoding space of the 30 bit binary of the second connection code. However, in either case, the data parity result in the parity bit of the second connection code is not equal to the parity result of at least one random bit, so that the first connection code is distinguished from the second connection code. After the connection code is received, the first device may verify the result based on the data verification bit in the first connection code, determine whether the received connection code is the first or second connection code. Secondly, the encoding method of the second connection code mentioned above may also make the variation range of the second connection code as large as possible. Specifically, for different types of LAN IP segments, the following situations exist:
Class A private segment address: the random bit varies within the range of binary bits [0-25], multiplied by three cases where the verification fails, that is 2²⁶×(2²⁻¹) = 201326492, resulting in approximately 200 million cases.
Class B private segment address: the random bit varies within the range of binary bits [0-24], multiplied by 7 cases where the verification fails, that is 2²⁵×(2³⁻¹) = 234881024, resulting in approximately 230 million cases.
Class C private segment address: the random bit varies within the range of binary bits [0-21], multiplied by 63 cases where the verification fails, that is 2²²×(2⁶⁻¹) = 264241152, resulting in approximately 260 million cases.

Reserved extension segment: the range of random bits varies within the range of binary bits [0-21], multiplied by 63 cases where the verification fails, that is 2²²×(2⁶⁻¹) = 264241152, resulting in approximately 260 million cases.

There are a total of 965 million possible changes in the second connection code, and even if one million devices are online, it only occupies one thousandth of the total amount, which can meet the actual usage needs.

As mentioned above, the embodiment of the present disclosure extends the encoding space of the first connection code where the parity bit is not equal to the parity result of specific data to the second connection code, so that the server has a large range of changes in the second connection code during the generation process of the second connection code, which ensures the uniqueness of the second connection code, thereby avoiding security issues caused by unintentional or malicious exhaustion. Secondly, the presentation form of the second and first connection codes is unified, both presented in the form of characters, and the second and first connection codes only need at least six bits, making user input simpler, convenient for user operation, and improving user experience.

As shown in Fig. 6, Fig. 6 is a flowchart of another method for connecting devices according to an embodiment of the present disclosure, which includes the following steps:
Step 301, receiving a first connection code or a second connection code, where the first connection code is used as at least one of a verification code and an address code for a local area network, and the second connection code is used as a verification code for a wide area network.

After the first or second connection code is displayed in the second device 20, the user inputs the first or second connection code on the second device 20 into the first device. For example, the first device 10 is equipped with a software application for device connection, and after the user opens the software application, the software interface of the software application will prompt the user to input the connection code. For example, the first device 10 displays an input box on the screen for the user to input the connection code. When the second device 20 displays the second connection code, the user inputs the second connection code in the software interface of the first device 10. When the second device 20 displays the first connection code, the user inputs the first connection code in the software interface of the first device 10.

Step 302, when the second connection code is received, requesting the server to send the first connection code associated with the second connection code.

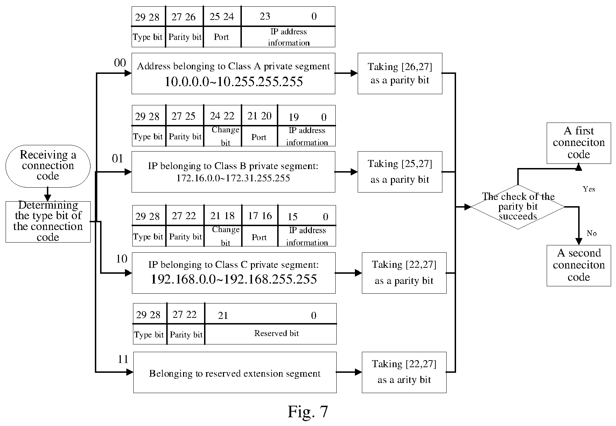

After the connection code is received, the first device 10 first determines whether the connection code is the first or second connection code. Specifically, after the connection code is received, the first device 10 first obtains the type bit of the connection code and judges the type of LAN IP segment corresponding to the connection code. Then, based on the correlation between the type of LAN IP segment and the length of the parity bit, the length of the parity bit can be confirmed to obtain the parity result from the parity bit. Then, it is further judged whether the parity result is equal to the parity result of at least one data in the other bits. If so, the connection code is the first connection code, and vice versa, the connection code is the second connection code. For example, in one embodiment, the first device 10 first obtains the bit 29-28 of the connection code, which is the type bit of the connection code, and judges the type of LAN IP segment corresponding to the connection code. When the bit 29-28 of the connection code is 00, the type of LAN IP segment corresponding to the connection code is Class A private segment address, and obtains the bit 27-26 of the connection code, which is the parity bit. It is judged whether the data parity result of the parity bit is equal to the parity result of at least one of the other bits. If so, the connection code is the first connection code; if not, the connection code is the second connection code. The same applies to other situations, and the specific process is shown in Fig. 7, which will not be further described in this embodiment.

In this embodiment, when the first device 10 confirms that the received connection code is the second connection code, it accesses the server 30 and sends a request for receiving the first connection code associated with the second connection code to the server 30. After the request is received, the server 30 queries the associated first connection code based on the second connection code and sends the first connection code to the first device 10. For example, in one embodiment, the first device 10 sends a request to query the information of the second device to the server 30 based on the second connection code after the second connection code is received. The server 30 queries the information of the second device based on the second connection code after the request is received, obtains the first connection code associated with the second connection code, and sends the first connection code to the first device 10.

Step 303, based on the first connection code, sending a first connection request to the second device through the local area network.

After the first connection code is received, the first device 10 parses the verification information and IP address information of the second device 20 from the first connection code, generates a first connection request based on the verification information and IP address information, and sends the first connection request to the second device 20 through LAN to establish a connection with the second device 20 through LAN.

Step 304, when the first connection code is received and connection establishment corresponding to the first connection request fails, requesting the server to send the second connection code associated with the first connection code.

If the user inputs a connection code in the first device 10 and the first device 10 determines that the connection code is the first connection code, a first connection request is generated based on the first connection code, and a first connection request is sent to the second device 20 through LAN to establish a connection with the second device 20 through LAN. When the LAN connection between the first device 10 and the second device 20 fails, the first device 10 further sends a second connection code to the server 30 for receiving the second connection code associated with the first connection code. The process of requesting a second connection code by the first device 10 is similar to the process of requesting a first connection code. The specific process may be referred to in step 303, and will not be repeated in this embodiment.

Step 305, after confirming that the connection establishment corresponding to the first connection request fails, sending a second connection request to the second device through the wide area network based on the second connection code.

In Step 304 or Step 305, after the first device 10 sends a first connection request to the second device 20 through LAN, if the first device 10 and the second device 20 fail to connect through LAN, the first device 10 confirms that the connection establishment corresponding to the first connection request has fails, further parses the verification information from the second connection code, and generates a second connection request based on the verification information, and sends a second connection request to the second device 20 through WAN to establish a connection with the second device 20 through WAN.

For example, in the scenario shown in Fig. 4, the second device 20 displays a button for creating a projection on the screen. The user clicks the button for creating this projection to send an instruction for creating a projection to the second device 20, or the user selects the button for creating this projection by using a remote control or other device to send the instruction to the second device 20. When the second device 20 detects that the button for creating a projection is clicked or selected, the second device 20 starts to obtain its own device information and generates a first connection code C58JBS based on the device information. At the same time, the second device 20 sends a request to the server 30 for applying a second connection code. After the request is received, the server 30 generates a second connection code DXD5AG and stores the first connection code C58JBS and the second connection code DXD5AG in association.

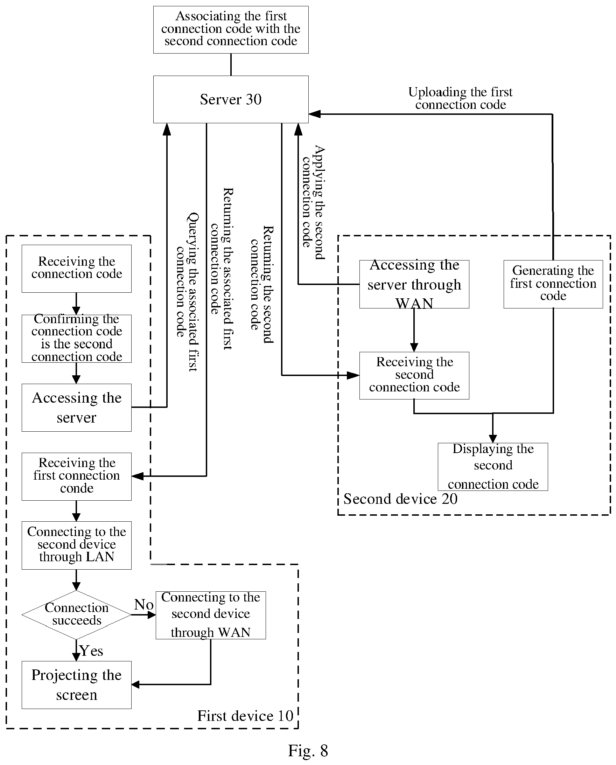

In one embodiment, as shown in Fig. 8, if the server 30 returns the second connection code DXD5AG to the second device 20, the second device 20 displays the second connection code DXD5AG on the screen. Then, the user opens the software application on the first device 10 for device connection, inputs the connection code DXD5AG in the connection-code input box used by the software, and the software application of the second device 20 analyzes the connection code DXD5AG, judges the type of connection code DXD5AG. After DXD5AG is determined as the second connection code, the second device 20 accesses the server 30 and requests to receive the first connection code C58JBS associated with the second connection code DXD5AG. Afterwards, the server 30 sends the first connection code C58JBS to the first device 10, and the software application of the first device 10 generates the first connection request based on the first connection code C58JBS, and sends a first connection request to the second device 20 through LAN. If the connection between the first device 10 and the second device 20 through LAN fails, the first device 10 generates a second connection request based on the second connection code DXD5AG and sends a second connection request to the second device 20 through WAN, so that the second device 20 is connected to through WAN.

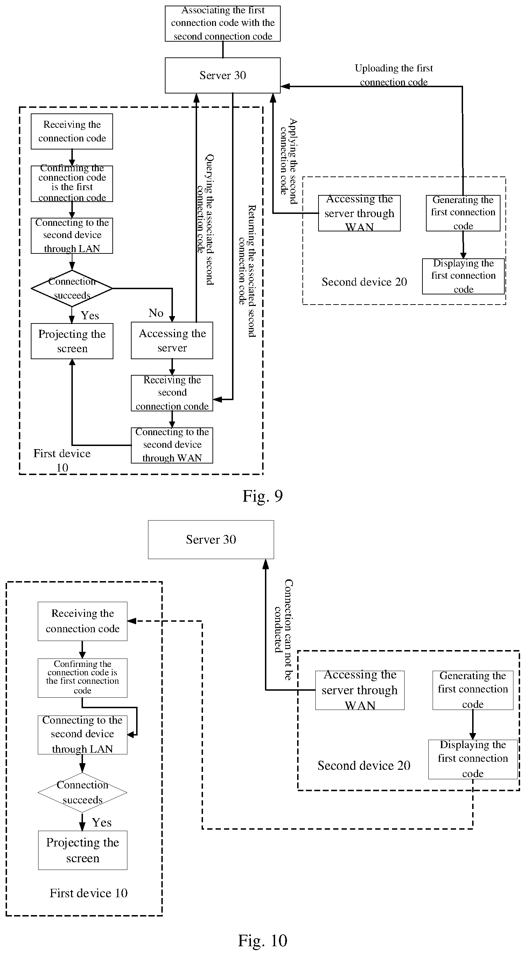

In another embodiment, as shown in Fig. 9, if the server 30 does not return the second connection code DXD5AG to the second device 20, the second device 20 displays the first connection code C58JBS. Then, the user opens the software application on the first device 10 and inputs the connection code C58JBS in the connection-code input box of the software application. Afterwards, the software application of the second device 20 analyzes the connection code C58JBS to judge the type of connection code C58JBS. After C58JBS is determined as the first connection code, the software application of the first device 10 generates a first connection request based on the first connection code C58JBS and sends the first connection request to the second device 20 through LAN. If the connection between the first device 10 and the second device 20 through LAN fails, the second device 20 accesses the server 30 and requests to receive the second connection code DXD5AG associated with the first connection code C58JBS. Afterwards, the server 30 sends the second connection code DXD5AG to the first device 10. The first device 10 generates the second connection request based on the second connection code DXD5AG and sends the second connection request to the second device 20 through WAN, Thus, the second device 20 is connected to through WAN.

After the first device 10 and the second device 20 are connected through WAN or LAN, screen projection may be carried out between the first device 10 and the second device 20. For example, the first device 10 sends video data containing image displayed on the current screen and audio data for playing sound to the second device 20 through LAN or WAN. After video data and audio data are received, the second device 20 decodes video and audio data, displays corresponding images and plays corresponding sounds on the screen.

As mentioned above, in the embodiment of the present disclosure, the first device first judges the type of connection code after the connection code input by the user is received. When the connection code input by the user is the first connection code, the second device is connected to through LAN. If the connection fails, the second connection code associated with the first connection code is further obtained from the server and connected to the second device through WAN. When the connection code input by the user is the second connection code, the first connection code associated with the second connection code is obtained from the server. First, the connection is made to the second device through LAN. If the connection fails, the connection is further made to the second device through WAN. The first device in the embodiment of the present disclosure can connect to the server through LAN or WAN after the first or second connection code is received, thereby being compatible with the network environment of LAN or WAN. Secondly, when the first device cannot connect to the second device through LAN, it can automatically switch to connect to the second device through WAN, avoiding the situation where the first device cannot connect to LAN, which greatly improves the connection success rate. In addition, considering the high bandwidth and low latency of LAN, as well as the absence of internet traffic fees, the first device prioritizes connecting to the second device through LAN regardless of whether it receives the first or second connection code. When the connection fails through LAN, it switches to WAN for connection, which can improve the security of information inaction and avoid unnecessary traffic costs.

In another embodiment, when the first device 10 and the second device 20 are only connected to LAN and are not connected to WAN, the connection process between the first device 10 and the second device 20 is shown in Fig. 10. The second device 20 detects whether it is connected to WAN after the first LAN connection code C58JBS is generated. If not, the second device 20 displays the first connection code C58JBS on the screen. Afterwards, the user opens the software application on the first device 10 for device connection, inputs the connection code C58JBS in the connection-code input box of the software application, and then the software application on the second device 20 analyzes the connection code C58JBS to judge the type of connection code C58JBS. After C58JBS is determined as the first connection code, the software application on the first device 10 generates a first connection request based on the first connection code C58JBS, and sends a first connection request to the second device 20 through LAN. After the first device 10 and the second device 20 are successfully connected through LAN, subsequent projection operations may be carried out.

In one embodiment, the second connection code is associated with service information.

Service information refers to information that includes service functions and service data. In this embodiment, as the WAN connection code is only used as a verification code and does not have service attributes, in one embodiment,
the second device 20 may also upload service information to the server 30, enabling the server 30 to associate the service information with the second connection code, so that after the first device 10 receives the second connection code, it may perform the corresponding service function when the second device 20 is successfully connected to. In one embodiment, the second connection code may be associated with multiple service information, so that the first device 10 may achieve different service functions after inputting the second connection code, thereby unifying all scalable service functions through a second connection code.

Correspondingly, the method for connecting devices further includes:
after confirming that the second connection code is received and the connection establishment corresponding to the first or second connection request succeeds, performing a service action corresponding to the service information.

In one embodiment, when the first device 10 receives the second connection code and successfully connects to the second device 20 through LAN or WAN, the first device 10 is further used to perform service actions corresponding to the service information associated with the second connection code. Service actions refer to the operations and means used to execute service functions. For example, in one embodiment, the second device 20 applies for a second connection code DXD5AG from the server 30, and the second device 20 further runs video conferencing software. Video conferencing software refers to software used to connect devices and transmits images captured by a camera on the device and sound recorded by the microphone. When a room number of the video conference is 1234567890, the room number 1234567890 may be uploaded as service data to the server 30 as service information for the second connection code DXD5AG. The server 30 associates the second connection code DXD5AG with the room number 1234567890. Afterwards, when the user inputs the second connection code DXD5AG in the video conference sub-function interface on the video conference software of the first device 10, the second device 20 is connected to the first device 10 through WAN. At the same time, the first device 10 accesses the server 30 and obtains the room number associated with the second connection code DXD5AG from the server 30. The video conferencing software on the first device 10 may be directly added to the room for video conferencing. In one embodiment, in addition to video conferencing, service information for service functions such as screen interaction or remote assistance may also be associated with a second connection code, allowing users to input the second connection code DXD5AG on other sub-functional interfaces of the video conferencing software on the first device 10, and also achieve corresponding screen interaction or remote assistance functions. Screen interaction function refers to the function of controlling images displayed on the screens of two interconnected devices, and remote assistance function refers to the function that one of two interconnected devices can control the other.

As mentioned above, the embodiment of the present disclosure associates the second connection code with the service information, so that the second device can perform service actions associated with the service information after the second connection code is received and the first device is successfully connected to. During this process, the user does not need to perform additional operations, which expands the function of the connection code and improves the user experience.

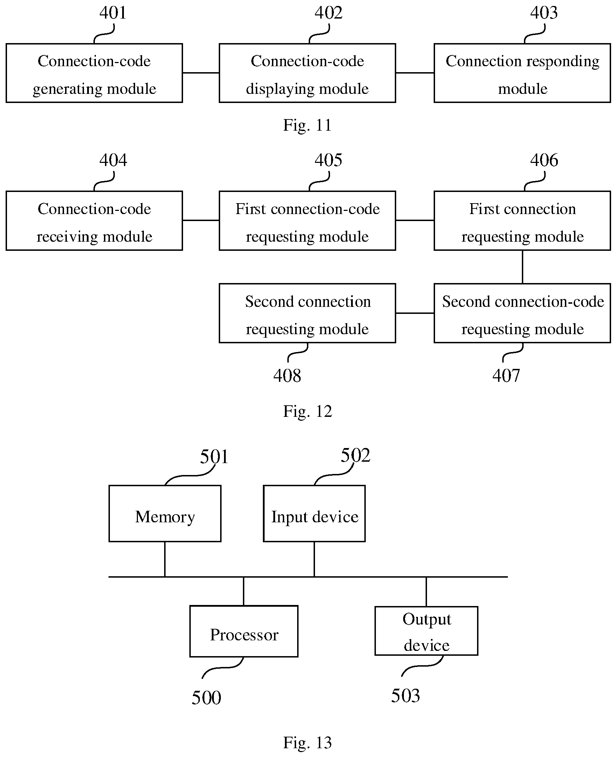

As shown in Fig. 11, Fig. 11 is a structural schematic diagram of an apparatus for connecting devices according to an embodiment of the present disclosure, which includes a connection-code generating module 401, a connection-code displaying module 402, and a connection responding module 403;
the connection-code generating module 401 is configured to generate a first connection code based on device information, and send the first connection code and a request for a second connection code to a server, so that the server stores the first connection code and the second connection code in association, where the first connection code is used as at least one of a verification code and an address code for a local area network, and the second connection code is used as a verification code for a wide area network;
the connection-code displaying module 402 is configured to display the first or second connection code to receive a connection request sent by the first device through the local area network or the wide area network, where the connection request is generated by the first device based on the first or second connection code; and
the connection responding module 403 is configured to, in response to the connection request, connect to the first device through the local area network or the wide area network.

On the basis of the above embodiments, the apparatus for connecting devices further includes a connection-code receiving module, and the connection-code receiving module is configured to receive the second connection code returned by the server after a first connection code is generated based on device information, and the first connection code and a request for a second connection code are sent to a server;
correspondingly, the connection-code displaying module 402 is configured to display the first or second connection code, specifically:
the connection-code displaying module 402 is configured to display the second connection code.

On the basis of the above embodiments, the second connection code is a connection code that includes at least six characters.

On the basis of the above embodiments, the second connection code includes a type bit, a parity bit, and a random bit. The type bit is used to store the type of the LAN IP segment that is associated with the bit length of the parity bit. The parity bit is used to store the data parity result that is not equal to the parity result of at least one data in the random bit. The random bit is used to store the random number.

As shown in Fig. 12, Fig. 12 is a structural schematic diagram of another apparatus for connecting devices according to an embodiment of the present disclosure, which includes a connection-code receiving module 404, a first connection-code requesting module 405, a first connection requesting module 406, a second connection-code requesting module 407, and a second connection requesting module 408;
the connection-code receiving module 404 is configured to receive a first connection code or a second connection code, where the first connection code is used as at least one of a verification code and an address code for a local area network, and the second connection code is used as a verification code for a wide area network;
the first connection-code requesting module 405 is configured to, when the second connection code is received, request the server to send the first connection code associated with the second connection code;
the first connection requesting module 406 is configured to, based on the first connection code, send a first connection request to the second device through the local area network;
the second connection-code requesting module 407 is configured to, when the first connection code is received and connection establishment corresponding to the first connection request fails, request the server to send the second connection code associated with the first connection code;
the second connection requesting module 408 is configured to, after confirming that the connection establishment corresponding to the first connection request fails, send a second connection request to the second device through the wide area network based on the second connection code.

The equipment for connecting devices provided above may be used to perform the method for connecting devices according to any of the above embodiments, and has corresponding functions and beneficial effects.

It should be noted that in the embodiments of the equipment for connecting devices mentioned above, the various units and modules included are only divided according to functional logic, but are not limited to the above division, as long as the corresponding functions can be implemented. In addition, the specific names of each functional unit are only for the purpose of distinguishing them from each other and are not intended to limit the scope of protection of the present disclosure.

Fig. 13 is a structural schematic diagram of an apparatus for connecting devices according to an embodiment of the present disclosure. As shown in Fig. 13, the apparatus for connecting devices includes a processor 500, a memory 501, an input device 502, and an output device 503. The number of processors 500 in the apparatus for connecting devices may be one or more, an example of one processor 500 is taken in Fig. 13. The processor 500, the memory 501, the input device 502, and the output device 503 in the apparatus for connecting devices may be connected through a bus or other means. An example of connection through a bus is taken in Fig. 13.

The memory 501, as a computer-readable storage medium, may be used to store software programs, computer executable programs, and modules, such as program instructions/modules corresponding to the method for connecting devices in the embodiment of the present disclosure (such as the connection-code generating module 401, the connection-code displaying module 402, and the connection responding module 403 in the apparatus for connecting devices). The processor 500 implements the method for connecting devices by running software programs, instructions, and modules stored in memory 501 to perform various functional applications and data processing of the apparatus for connecting devices.

The memory 501 may mainly include a storage program area and a storage data area. The storage program area may store an operating system and an application program required for at least one function. The storage data area may store data created based on the use of device connections. In addition, the memory 501 may include high-speed random access memory, as well as non-volatile memory, such as at least one disk storage device, flash memory device, or other non-volatile solid-state storage device. In some examples, the memory 501 may further include memory remotely set relative to the processor 500, which may be connected to apparatus for connecting devices through a network. Examples of the above networks include, but are not limited to, the internet, enterprise intranets, LAN, mobile communication networks, and their combinations.

The input device 502 may be used to receive input numerical or character information, as well as generate key signal inputs related to user settings and functional control of an apparatus for connecting devices. The output device 503 may include display devices such as a display screen. In addition, the device connection device may also include a communication device to achieve communication with external devices such as cameras.

The above-mentioned apparatus for connecting devices includes corresponding equipment for connecting devices, which may be used to perform any device connection method, and has corresponding functions and beneficial effects.

Those skilled in the art can clearly understand that for the convenience and conciseness of the description, the specific working process of the equipment and apparatus described above can refer to the corresponding process in the above-mentioned method embodiments, which will not be repeated herein.

In addition, according to an embodiment of the present disclosure, a storage medium is further provided, which includes computer executable instructions, and the computer executable instructions are used to perform relevant operations in the method for connecting devices provided in any embodiment of the present disclosure when executed by a computer processor, and have corresponding functions and beneficial effects.

Those skilled in the art should understand that the embodiments of the present disclosure may be provided as a method, a system, or computer program product.

Therefore, the present disclosure may adopt the form of a complete hardware embodiment, a complete software embodiment, or an embodiment combining software and hardware. Moreover, the present disclosure may adopt the form of computer program product implemented on one or more computer-usable storage media (which may include disk storage, CD-ROM, optical storage, etc.) containing computer-usable program codes. The present disclosure is described with reference to flowcharts and/or block diagrams of methods, devices (systems), and computer program products in embodiments of the present disclosure. It should be understood that each process and/or block in the flowchart and/or block diagram, and the combination of processes and/or blocks in the flowchart and/or block diagram may be implemented by computer program instructions. These computer program instructions may be provided to the processor of a general-purpose computer, a special-purpose computer, an embedded processor, or other programmable data processing equipment to generate a machine, so that with the instructions executed by the processor of the computer or other programmable data processing equipment, a device that is configured to implement the functions specified in one process or multiple processes in the flowchart and/or one block or multiple blocks in the block diagram is generated. These computer program instructions may also be stored in a computer-readable memory that may direct a computer or other programmable data processing equipment to work in a specific manner, so that a series of operational steps is executed on a computer or other readable devices, and thus the instructions executed on the computer or other readable devices provide the steps of selected function in one flow or multiple flows in the flowchart and/or one block or multiple blocks in the block diagram.

In an optional configuration, the computing device includes one or more processors (CPUs), input/output interfaces, network interfaces, and memory. The memory may include non-permanent memory, random access memory (RAM) and/or non-volatile memory, etc.in a computer-readable medium, such as read-only memory (ROM) or flash memory (flash RAM). The memory is an example of a computer-readable medium.

Computer-readable storage media include permanent and non-permanent, removable and non-removable media, and information storage may be achieved by any method or technology. The information may be computer-readable instructions, data structures, program modules, or other data. Examples of computer-readable storage media include, but are not limited to: phase change memory (PRAM), static random access memory (SRAM), dynamic random access memory (DRAM), other types of random access memory (RAM), read-only memory (ROM), electrically erasable programmable read-only memory (EEPROM), flash memory or other memories, compact disc read-only memory (CD-ROM), digital versatile disc (DVD) or other optical storage, magnetic cassette tape, magnetic disk storage or other magnetic storage devices or any other non-transmission media which may be configured to store information capable of being accessed by computing devices. According to the definition in the present disclosure, computer-readable media does not include transitory media, such as modulated data signals and carrier waves.

It should also be noted that the terms "include", "comprise" or any other variants thereof are intended to cover non-exclusive inclusion, so that a process, method, commodity or equipment including a series of elements not only includes those elements, but also includes other elements that are not explicitly listed, or also include elements inherent to such processes, methods, commodities, or equipment. If there are no more restrictions, the element defined by the sentence "including a..." does not exclude the existence of other identical elements in the process, method, commodity, or equipment that includes the element.

It should be noted that the above is only preferred embodiments of the present disclosure and the applied technical principle. Those skilled in the art will understand that the present disclosure is not limited to the specific embodiments described herein, and it is possible for those skilled in the art to make various obvious changes, readjustments and substitutions without departing from the claimed scope of the present disclosure.

## Claims

1. A method for connecting devices, comprising:
generating a first connection code based on device information, and sending the first connection code and a request for a second connection code to a server, so that the server stores the first connection code and the second connection code in association, wherein the first connection code is used as at least one of a verification code and an address code for a local area network, and the second connection code is used as a verification code for a wide area network;
displaying the first or second connection code to receive a connection request sent by the first device through the local area network or the wide area network, wherein the connection request is generated by the first device based on the first or second connection code; and
in response to the connection request, connecting to the first device through the local area network or wide area network.

2. The method for connecting devices of claim 1, wherein after generating the first connection code based on device information, and sending the first connection code and the request for the second connection code to the server, the method for connecting devices further comprises:
receiving the second connection code returned by the server,
the displaying the first or second connection code is specifically:
displaying the second connection code.

3. The method for connecting devices of claim 1, wherein the second connection code is a connection code that includes at least six characters.

4. The method for connecting devices of claim 3, wherein the second connection code includes a type bit, a parity bit, and a random bit, the type bit is used to store the type of the local area network IP segment that is associated with the bit length of the parity bit, the parity bit is used to store the data parity result that is not equal to the parity result of at least one data in the random bit, and the random bit is used to store the random number.

5. A method for connecting devices, comprising:
receiving a first connection code or a second connection code, wherein the first connection code is used as at least one of a verification code and an address code for a local area network, and the second connection code is used as a verification code for a wide area network;
when the second connection code is received, requesting the server to send the first connection code associated with the second connection code;
based on the first connection code, sending a first connection request to the second device through the local area network;
when the first connection code is received and a connection establishment corresponding to the first connection request fails, requesting the server to send the second connection code associated with the first connection code; and
after confirming that the connection establishment corresponding to the first connection request fails, sending a second connection request to the second device through the wide area network based on the second connection code.

6. The method for connecting devices of claim 5, wherein the second connection code is associated with service information;
the method for connecting devices further comprises:
after confirming that the second connection code is received and the connection establishment corresponding to the first or second connection request succeeds, performing a service action corresponding to the service information.

7. Equipment for connecting devices, comprising a connection-code generating module, a connection-code displaying module, and a connection responding module;
wherein the connection-code generating module is configured to generate a first connection code based on device information, and send the first connection code and a request for a second connection code to a server, so that the server stores the first connection code and the second connection code in association, wherein the first connection code is used as at least one of a verification code and an address code for a local area network, and the second connection code is used as a verification code for a wide area network;
the connection-code displaying module is configured to display the first or second connection code to receive a connection request sent by the first device through the local area network or the wide area network, wherein the connection request is generated by the first device based on the first or second connection code;
the connection responding module is configured to, in response to the connection request, connect to the first device through the local area network or the wide area network.

8. Equipment for connecting devices, comprising a connection-code receiving module, a first connection-code requesting module, a first connection requesting module, a second connection-code requesting module, and a second connection requesting module;
wherein the connection-code receiving module is configured to receive a first connection code or a second connection code, wherein the first connection code is used as at least one of a verification code and an address code for a local area network, and the second connection code is used as a verification code for a wide area network;
the first connection-code requesting module is configured to, when the second connection code is received, request the server to send the first connection code associated with the second connection code;
the first connection requesting module is configured to, based on the first connection code, send a first connection request to the second device through the local area network;
the second connection-code requesting module is configured to, when the first connection code is received and connection establishment corresponding to the first connection request fails, request the server to send the second connection code associated with the first connection code;
the second connection requesting module is configured to, after confirming that the connection establishment corresponding to the first connection request fails, send a second connection request to the second device through the wide area network based on the second connection code.

9. An apparatus for connecting devices, comprising a processor and a memory;
the memory is configured to store a computer program and transfer the computer program to the processor;
the processor is configured to perform the method for connecting devices of any one of claims 1-6 based on an instruction in the computer program.

10. A storage medium for storing computer executable instructions, wherein the computer executable instructions are used to, when executed by a computer processor, perform the method for connecting devices of any one of claims 1-6.
